(19) Europäisches Patentamt / European Patent Office / Office européen des brevets

(11) **EP 1 746 715 A2**

(12) # EUROPÄISCHE PATENTANMELDUNG

(43) Veröffentlichungstag:
**24.01.2007  Patentblatt 2007/04**

(51) Int Cl.:
**H02P 6/04** *(2006.01)*          **H02P 5/50** *(2006.01)*

(21) Anmeldenummer: **06013437.6**

(22) Anmeldetag: **29.06.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.07.2005  DE 102005033884**

(71) Anmelder: **Bosch Rexroth AG**
**70184 Stuttgart (DE)**

(72) Erfinder:
• **Schmitt, Alexander**
  **97337 Dettelbach (DE)**
• **Wahler, Matthias**
  **97450 Arnstein (DE)**

(54) **Verfahren zum Kompensieren von unterschiedlichen Drehmomenten zweier gekoppelter Elektromotoren und Vorrichtung hierfür**

(57)    Es wird ein Verfahren zum Kompensieren von unterschiedlichen Drehmomenten zweier Elektromotoren vorgeschlagen, wobei jeweils ein Elektromotor in einem Antrieb angeordnet ist, wobei die Antriebe gekoppelt in einer Antriebsvorrichtung angeordnet sind, wobei jeder Elektromotor mit einem Geschwindigkeitsregelkreis auf eine identische Drehmomentabgabe geregelt wird, mit folgenden Verfahrensschritten:

a) Ermitteln von Ist-Strömen in beiden Elektromotoren,
b) Ermitteln eines Korrekturfaktors aus den Ist-Strömen, der ein Verhalten von Drehmomentkonstanten der Elektromotoren beschreibt, und
c) Einstellen von im Wesentlichen gleich großen Kreisverstärkungen in den Geschwindigkeitsregelkreisen der beiden Antriebe unter Verwendung des Korrekturfaktors.

Weiterhin wird eine Vorrichtung zur Durchführung des erfindungsgemäßen Verfahrens vorgeschlagen.

FIG.1

EP 1 746 715 A2

**Beschreibung**

Die Erfindung betrifft ein Verfahren zum Kompensieren von unterschiedlichen Drehmomenten zweier gekoppelter Elektromotoren gemäß Patentanspruch 1 und eine Vorrichtung zum Kompensieren von unterschiedlichen Drehmomenten zweier Elektromotoren gemäß Patentanspruch 9.

Zwei elektrische Antriebe mit zwei baugleichen, permanent erregten Synchronmotoren können bei folgenden Randbedingungen betrieben werden:

- beide Antriebe in Lageregelung,
- gleiches Lagesollwertprofil für beide Antriebe,
- beide Antriebe mechanisch gekoppelt, und
- gleiche Parametrierung für beide Antriebe.

Trotz synchroner Ansteuerung kann es vorkommen, dass die beiden Synchronmotoren unterschiedliche Drehmomente abgeben. Eine daraus resultierende Momenten-Istwertdifferenz kann zu unerwünschten Auswirkungen auf eine mit den Synchronmotoren gekoppelte Mechanik führen. Diese können beispielsweise darin bestehen, dass die Mechanik unzulässige Bewegungen ausführt, die zu einer Beschädigung der Mechanik führen können. Weiterhin ist es in unerwünschter Weise möglich, dass es zu unerwünschten Spannungszuständen innerhalb der Mechanik kommen kann. Ferner ist es möglich, dass aus den unterschiedlichen Momenten-Istwerten auch eine unerwünschte Lage-Istwertdifferenz der beiden Antriebe resultiert. Aus den genannten Gründen kann eine Lebensdauer der Mechanik nachteilig verringert sein.

Es ist die Aufgabe der vorliegenden Erfindung, ein verbessertes Verfahren zum Betreiben von gekoppelten Elektromotoren bereitzustellen.

Die Erfindung wird gelöst mit einem Verfahren gemäß Patentanspruch 1 und mit einer Vorrichtung gemäß Patentanspruch 9. Bevorzugte Weiterbildungen der Erfindung sind in abhängigen Ansprüchen angegeben.

Das erfindungsgemäße Verfahren ist zum Kompensieren von unterschiedlichen Drehmomenten zweier Elektromotoren vorgesehen, wobei jeweils ein Elektromotor in einem Antrieb angeordnet ist, wobei die Antriebe gekoppelt in einer Antriebsvorrichtung angeordnet sind, wobei jeder Elektromotor mit einem Geschwindigkeitsregelkreis auf eine identische Drehmomentabgabe geregelt wird. Das Verfahren weist folgende Verfahrensschritte auf:

- Ermitteln von Ist-Strömen in beiden Elektromotoren,
- Ermitteln eines Korrekturfaktors aus den Ist-Strömen, der ein Verhalten von Drehmomentkonstanten der Elektromotoren beschreibt, und
- Einstellen von im Wesentlichen gleich großen Kreisverstärkungen in den Geschwindigkeitsregelkreisen der beiden Antriebe unter Verwendung des Korrekturfaktors.

In vorteilhafter Weise ist es mit Hilfe des erfindungsgemäßen Verfahrens möglich, eine Unsymmetrie der Drehmomentkonstanten zweier gekoppelter Elektromotoren zu erfassen und zu kompensieren.

Eine bevorzugte Ausführungsform des erfindungsgemäßen Verfahrens sieht vor, dass die Kompensation der unterschiedlichen Drehmomentkonstanten in einem einzelnen oder in beiden Antrieben gemeinsam durchgeführt wird. Dadurch ist vorteilhaft eine Wahlmöglichkeit der Kompensation der unsymmetrischen Drehmomentkonstanten unterstützt.

Eine weitere bevorzugte Ausgestaltung des erfindungsgemäßen Verfahrens sieht vor, dass das Kompensieren der unterschiedlichen Drehmomentkonstanten einmalig oder zyklisch-adaptiv bei laufendem Betrieb der Antriebsvorrichtung durchgeführt wird. Dadurch kann eine vorhandene Unsymmetrie der Drehmomentkonstanten entweder einmalig vor einem Betriebsbeginn oder in einer dynamischen Art und Weise zyklisch-adaptiv bei laufendem Betrieb der Antriebsvorrichtung durchgeführt werden.

Die Erfindung wird nachfolgend näher beschrieben. Eine Figur zeigt dabei ein prinzipielles Blockschaltbild einer Vorrichtung, mit der das erfindungsgemäße Verfahren durchgeführt werden kann.

Die Drehmomentkonstante $K_m$ eines permanent erregten Synchronmotors ohne Reluktanzmoment geht als Proportionalfaktor in folgender allgemeiner Form in ein Übertragungsverhalten des .Synchronmotors ein:

$$Motormoment\ M = Strom\text{-}Istwert\ i \times Drehmomentkonstante\ K_m$$

Um die Motormomente zweier Synchronmotoren in jeweils einem Antrieb gleich groß auszugestalten, sind bei gleichen Strom-Istwerten also identische Werte für die Drehmomentkonstanten erforderlich. Mathematisch lässt sich dieser Zusammenhang wie folgt ausdrücken:

$$\frac{M_{iA1}}{M_{iA2}} = \frac{K_{m\_A1} * i_{Ist\_A1}}{K_{m\_A2} * i_{Ist\_A2}} = 1;$$

*für $i_{Ist\_A1} = i_{Ist\_A2}$;*
$K_{m\_A1} = K_{m\_A2}$;
$K_{m\_A1} = K_{m\_A2}$;
mit den Parametern:

| | |
|---|---|
| $M_{iA1}$ | Momenten-Istwert Antrieb 1 |
| $M_{iA2}$ | Momenten-Istwert Antrieb 2 |
| $K_{m\_A1}$ | Drehmomentkonstante Antrieb 1 |
| $K_{m\_A2}$ | Drehmomentkonstante Antrieb 2 |
| $i_{ist\_A1}$ | Strom-Istwert Antrieb 1 |
| $i_{ist\_A2}$ | Strom-Istwert Antrieb 2 |

Aus der Formel ist ersichtlich, dass bei identischen Strom-Istwerten $i_{ist\_A1}$, $i_{ist\_A2}$ und identischen Drehmomentkonstanten $K_{m\_A1}$, $K_{m\_A2}$ in beiden Antrieben das Verhältnis der beiden Drehmomenten-Istwerte $M_{iA1}$, $M_{iA2}$ gleich 1 ist. Dies bedeutet, dass die beiden Dremomenten-Istwerte $M_{iA1}$, $M_{iA2}$ im wesentlichen gleich groß sind und es somit zu keinen unerwünschten Auswirkungen aufgrund einer Drehmomentdifferenz auf eine Mechanik der gekoppelten Synchronmotoren kommen kann. Sind hingegen die beiden Drehmomentkonstanten $K_{m\_A1}$, $K_{m\_A2}$ verschieden groß, ist das Verhältnis der beiden Drehmomenten-Istwerte ungleich 1.

Erfindungsgemäß wird das Verhältnis der beiden Drehmomenten-Istwerte $M_{iA1}$, $M_{iA2}$ in jedem Moment eines Betriebes der gekoppelten Synchronmotoren zu 1 kompensiert.

Dazu wird zunächst eine vorhandene Momentenunsymmetrie zwischen den beiden Antrieben mit den Synchronmotoren ermittelt. Die Ermittlung wird erfindungsgemäß mit Hilfe einer synchronisierten Messung von Strom-Istwerten in beiden Synchronmotoren in einem geregelten Servobetrieb durchgeführt. Zu diesem Zweck wird eine Antriebsvorrichtung mit den beiden mechanisch gekoppelten Synchronmotoren derart betrieben, dass sich ein stationärer Betriebspunkt (Geschwindigkeit v = konst.) mit einem Momentengleichgewicht $M_{iA1} = M_{iA2}$ einstellt. Die Ist-Ströme $i_{\_A1}$, $i_{\_A2}$ der beiden Synchronmotoren werden durch eine Messreihe ermittelt, wobei beispielsweise alle 250 Mikrosekunden ein Strom-Istwert beider Synchronmotoren aufgenommen wird. Das Ermitteln der Strom-Istwerte kann beispielsweise durch ein Anfahren der beiden Antriebe gegen ein feststehendes Hindernis erreicht werden. Mit Hilfe einer antriebsintegrierten Oszilloskop-Funktion können die Strom-Istwerte in einfacher Weise aufgezeichnet werden.

Aus der Reihe von Messwerten der Ist-Ströme wird anschließend durch eine elementenweise Division eine Reihe von Quotienten gebildet, die aufgrund der oben angegeben mathematischen Relation ein Verhältnis der beiden Drehmomentkonstanten $K_{m\_A1}$, $K_{m\_A2}$ der beiden Synchronmotoren widerspiegeln. Die Reihe der Quotienten stellt somit ein Korrekturmaß für die Unsymmetrie der beiden Antriebsstränge dar, das zu einer nachfolgenden erfindungsgemäßen Kompensation herangezogen werden kann. Für einen Zahlenwert der Quotienten gilt:

Quotient > 1: Drehmomentkonstante $K_{m\_A1}$ > Drehmomentkonstante $K_{m\_A2}$

Quotient < 1: Drehmomentkonstante $K_{m\_A1}$ < Drehmomentkonstante $K_{m\_A2}$

In der geschilderten Weise ist es also möglich, durch einfache elementenweise Division der Strom-Istwerte das zahlenmäßige Verhältnis der zugehörigen Drehmomentkonstanten $K_{m\_A1}$ und $K_{m\_A2}$ zu ermitteln. Mit Hilfe der elementenweisen Division der Strom-Istwerte der beiden Elektromotoren M1, M2 können in vorteilhafter Weise Streuungen gemittelt werden, sodass der ermittelte Quotient ein genaues Abbild eines Symmetrieverhaltens der unterschiedlichen Drehmomentkonstanten der beiden Antriebe A1, A2 widerspiegelt.

Die ermittelte Momenten-Unsymmetrie wird nunmehr mittels des erfindungsgemäßen Verfahrens kompensiert. Der Kompensierung liegt folgende mathematische Relation für eine offene Kreisverstärkung eines Geschwindigkeitsregelkreises eines Antriebsstrangs zu Grunde:

$$K_0 \approx P1 * 1/P2 * \text{ wirksame Drehmomentkonstante}$$

mit den Parametern:

$K_0$     offene Kreisverstärkung des Geschwindigkeitsregelkreises
P1     Regelparameter für die Proportionalverstärkung des Geschwindigkeitsregelkreises
P2     Regelparameter für die Drehmomentkonstante

Zusätzlich hängt die offene Kreisverstärkung $K_0$ noch von einem Regelparameter P3 ab, wobei der Regelparameter P3 eine Begrenzung für das wirksame Drehmoment des Geschwindigkeitsregelkreises repräsentiert. Eine Anpassung der offenen Kreisverstärkung $K_0$ des Geschwindigkeitsregelkreises kann somit mit Hilfe der drei verschiedenen Regelparameter P1, P2 und P3 durchgeführt werden.

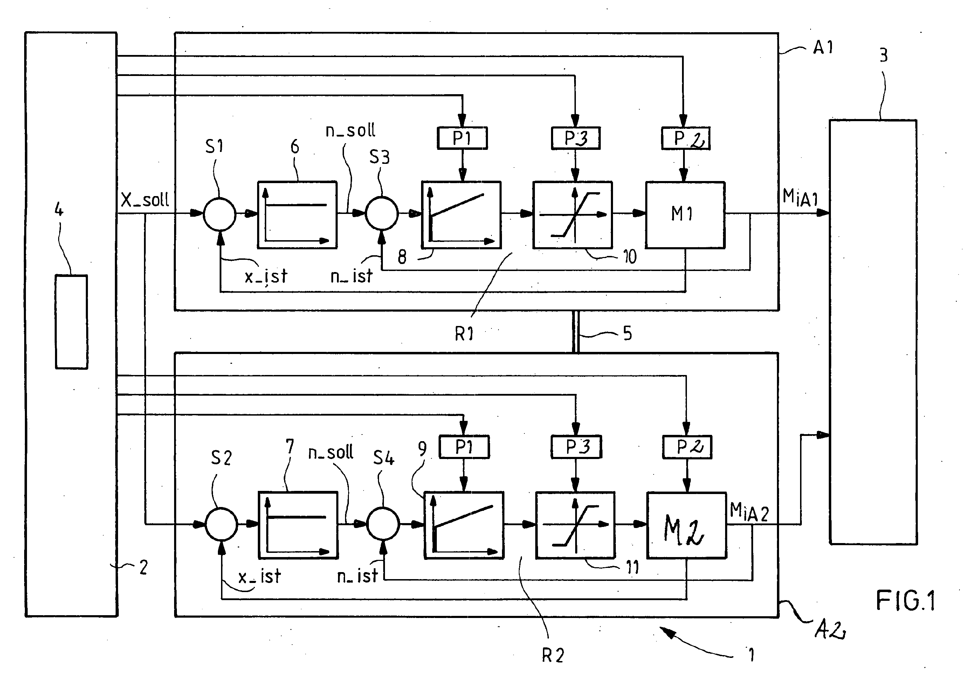

Im Folgenden wird anhand von Figur 1 eine Kompensierung unterschiedlicher Drehmomentkonstanten zweier gekoppelter Antriebe beschrieben. Die Figur zeigt eine Antriebsvorrichtung 1 mit zwei Antrieben A1, A2, die über eine Kopplungseinrichtung 5 mechanisch miteinander gekoppelt sind. Die beiden Antriebe A1, A2 sind im Wesentlichen identisch ausgestaltet. Eine Ansteuerung der Antriebsvorrichtung 1 mit den beiden Antrieben A1, A2 erfolgt mittels einer Steuerungseinrichtung 2. Die beiden Antriebe A1, A2 sind unabhängig voneinander mit Hilfe der Steuerungseinrichtung 2 steuer- bzw. regelbar. Dies geschieht dadurch, dass die Steuerungseinrichtung 2 Zugriff auf die Regelparameter P1, P2 und P3 der beiden Antriebe A1 und A2 hat.

Die beiden Antriebe A1, A2 werden von der Steuerungseinrichtung 2 in Lageregelung betrieben, wobei die beiden Antriebe A1, A2 einem vorgegebenen Lagesollwertprofil folgen sollen. Dazu wird den Antrieben A1, A2 von der Steuerungseinrichtung 2 ein Wert für die Solllage $X_{Soll}$ an Summationspunkte S1, S2 zugeführt. Den Summationspunkten S1, S2 wird weiterhin jeweils ein Wert für eine Istlage $X_{Ist}$ zugeführt. Somit wird den Lagereglern 6, 7 ein Differenzwert aus Solllage $X_{Soll}$ und Istlage $X_{Ist}$ zugeführt, wobei die Lageregler 6, 7 aus dem Differenzwert einen Drehzahlsollwert $n_{Soll}$ ermitteln und an Summationspunkte S3, S4 zuführen. Die Erfassung der Istlage $X_{Ist}$ kann beispielsweise mit Hilfe von Motorgebern (nicht dargestellt) durchgeführt werden, die in den Elektromotoren M1, M2 angeordnet sind. Die Summationspunkte S3, S4 bilden Eingangspunkte in Geschwindigkeitsregelkreise R1, R2. Die beiden Geschwindigkeitsregelkreise R1, R2 umfassen jeweils einen Proportionalverstärker 8, 9, einen Momentenbegrenzer 10, 11 und einen Elektromotor M1, M2. Die beiden Elektromotoren M1, M2 sind beispielsweise als permanenterregte Synchronmotoren ohne Reluktanzmoment ausgebildet. Mit Hilfe der Geschwindigkeitsregelkreise R1, R2 wird somit ein Differenzwert aus Drehzahlsollwert $n_{Soll}$ und Drehzahlistwert $n_{Ist}$ verwendet, um die Elektromotoren M1, M2 drehzahlmäßig auf eine identische Drehmomentenabgabe zu regeln. Die Antriebe A1, A2 mit den Elektromotoren M1, M2 generieren Momenten-Istwerte $M_{iA1}$, $M_{iA2}$, die auf eine Mechanik 3 einwirken.

Über die drei Regelparameter P1, P2 und P3 können die Elemente der Geschwindigkeitsregelkreise R1, R2 von der Steuerungseinrichtung 2 individuell angesteuert werden. Dabei wird der Regelparameter P1 zur Ansteuerung der Proportionalverstärker 8, 9 der Geschwindigkeitsregelkreise R1, R2 verwendet. Der Regelparameter P2 wird zu einer Normierung der Geschwindigkeitsregelkreise R1, R2 hinsichtlich der Drehmomentkonstanten der Elektromotoren M1, M2 verwendet. Der Regelparameter P3 wird für eine Ansteuerung der Momentenbegrenzer 10, 11 der Geschwindigkeitsregelkreise R1, R2 verwendet.

Eine Speichereinrichtung 4 innerhalb der Steuerungseinrichtung 2 wird beispielsweise dazu benutzt, um Zahlenwerte für die Regelparameter P1, P2 und P3 abzuspeichern und durch einen Auslesevorgang den Antrieben A1, A2 zuzuführen.

Man erkennt aus der Figur, dass beide Antriebe A1, A2 mit den Geschwindigkeitsregelkreisen R1, R2 in unabhängiger Weise durch die Regelparameter P1, P2, P3 identisch parametrierbar sind. Dies bedeutet, dass es zur Durchführung des erfindungsgemäßen Verfahrens möglich ist, die Regelparameter P1, P2 und P3 lediglich eines einzelnen der Geschwindigkeitsregelkreise R1, R2 oder aber die Regelparameter P1, P2, P3 beider Geschwindigkeitsregelkreise R1, R2 anzupassen. Ferner ist es möglich, die Regelparameter P1, P2, P3 beliebig kombinierbar anzusteuern. Es ergibt sich dadurch eine vorteilhafte Wahlmöglichkeit für eine Kompensierung der Antriebe A1, A2.

Unter Verwendung der mathematischen Formel für die offene Kreisverstärkung $K_0$ kann somit durch individuelle Ansteuerung der Geschwindigkeitsregelkreise R1, R2 eine im Wesentlichen identische, offene Kreisverstärkung $K_0$ der beiden Geschwindigkeitsregelkreise R1, R2 und daraus resultierend eine Kompensierung einer vorhandenen Momentenunsymmetrie in beiden Antrieben A1, A2 erreicht werden. Für den Fall, dass bei Vorliegen einer Momentenunsymmetrie eine wirksame Drehmomentkonstante des ersten Antriebs A1 größer ist als eine wirksame Drehmomentkonstante des zweiten Antriebs A2, bedeutet dies, dass die offene Kreisverstärkung des ersten Geschwindigkeitsregelkreises R1 größer ist als die offene Kreisverstärkung des zweiten Geschwindigkeitsregelkreises R2. Für eine Kompensierung dieser Momentenunsymmetrie muss also die offene Kreisverstärkung $K_0$ des ersten Geschwindigkeitsregelkreises R1 verkleinert oder die offene Kreisverstärkung $K_0$ des zweiten Geschwindigkeitsregelkreises R2 vergrößert werden. Dazu kann erfindungsgemäß entweder der Regelparameter P2 des ersten Geschwindigkeitsregelkreises R1 vergrößert oder der Regelparameter P1 des ersten Geschwindigkeitsregelkreises R1 verkleinert werden. Ferner kann erfindungsgemäß entweder der Regelparameter P2 des zweiten Geschwindigkeitsregelkreises R2 verkleinert oder der Regelparameter P1 des zweiten Geschwindigkeitsregelkreises R2 vergrößert werden.

Mit Hilfe des Regelparameters P3 kann ein wirksames Drehmoment, das der Antrieb A1 generieren kann, begrenzt werden. Auf diese Weise kann über eine unsymmetrische Momentenbegrenzung ebenfalls eine Kompensierung der unterschiedlichen Drehmomentkonstanten der beiden Antriebe A1, A2 durchgeführt werden. Eine Ansteuerung des ersten Momentenbegrenzers 10 mit Hilfe des Regelparameters P3 kann dadurch ebenfalls für eine Anpassung der wirksamen offenen Kreisverstärkungen $K_0$ der beiden Geschwindigkeitsregelkreise R1, R2 verwendet werden.

Ein besonderer Vorteil des erfindungsgemäßen Verfahrens wird darin gesehen, dass die Kompensierung der unterschiedlichen Drehmomentkonstanten in gleichwirkender Weise mit Hilfe der drei verschiedenen Regelparameter P1, P2, P3 erreicht werden kann. Dadurch können vorteilhaft unterschiedliche Regelparameter für Softwareparametrierungen (sogenannte Ident-Nummern) von Antriebsregelgeräten diverser Hersteller verwendet werden. Auf diese Weise ist eine Diversifizierung und Flexibilität des erfindungsgemäßen Verfahrens in vorteilhafter Weise unterstützt.

Weiterhin ist es in vorteilhafter Weise möglich, das Kompensieren der unterschiedlichen Drehmomentkonstanten einmalig oder in zyklisch-adaptiver Weise während eines laufenden Betriebes der Antriebsvorrichtung 1 vorzunehmen. Die Arten des Durchführens einer zyklisch-adaptiven Kompensierung hängen davon ab, welche technischen Ansteuermöglichkeiten die Steuerungseinrichtung 2 und die Antriebe A1, A2 aufweisen. Letztlich hängt die Art der Durchführung des erfindungsgemäßen Verfahrens also von der Ausgestaltung des jeweiligen Zielsystems ab, auf dem das Verfahren durchgeführt werden soll.

Die prinzipielle Darstellung der Antriebsvorrichtung 1 in Figur 1 ist dabei unabhängig davon ob mit dem erfindungsgemäßen Verfahren eine zyklisch-adaptive oder eine einmalige Kompensierung der unterschiedlichen Drehmomentkonstanten durchgeführt werden soll.

Die in der Beschreibung, den Patentsprüchen und der Zeichnung offenbarten Aspekte der Erfindung können sowohl einzeln als auch in beliebiger Kombination für die Durchführung der Erfindung wesentlich sein.

Bezugszeichenliste

| | |
|---|---|
| 1 | Antriebsvorrichtung |
| 2 | Steuerungseinrichtung |
| 3 | Mechanik |
| 4 | Speichereinrichtung |
| 5 | Kopplungseinrichtung |
| 6 | Erster Lageregler |
| 7 | Zweiter Lageregler |
| 8 | Erster Proportionalverstärker |
| 9 | Zweiter Proportionälverstärker |
| 10 | Erster Momentenbegrenzer |
| 11 | Zweiter Momentenbegrenzer |
| M1 | Erster Elektromotor |
| M2 | Zweiter Elektromotor |
| A1 | Erster Antrieb |
| A2 | Zweiter Antrieb |
| R1 | Erster Geschwindigkeitsregelkreis |
| R2 | Zweiter Geschwindigkeitsregelkreis |
| S1 | erster Summationspunkt |
| S2 | zweiter Summationspunkt |
| S3 | dritter Summationspunkt |

S4     vierter Summationspunkt

**Patentansprüche**

1. Verfahren zum Kompensieren von unterschiedlichen Drehmomenten zweier Elektromotoren (M1, M2), wobei jeweils ein Elektromotor (M1, M2) in einem Antrieb (A1, A2) angeordnet ist, wobei die Antriebe (A1, A2) gekoppelt in einer Antriebsvorrichtung (1) angeordnet sind, wobei jeder Elektromotor (M1, M2) mit einem Geschwindigkeitsregelkreis (R1, R2) auf eine identische Drehmomentabgabe geregelt wird, mit folgenden Verfahrensschritten:

   a) Ermitteln von Ist-Strömen in beiden Elektromotoren (M1, M2);
   b) Ermitteln eines Korrekturfaktors aus den Ist-Strömen, der ein Verhalten von Drehmomentkonstanten der Elektromotoren (M1, M2) beschreibt; und
   c) Einstellen von im wesentlichen gleich großen Kreisverstärkungen in den Geschwindigkeitsregelkreisen (R1, R2) der beiden Antriebe (A1, A2) unter Verwendung des Korrekturfaktors.

2. Verfahren nach Anspruch 1, wobei im Verfahrensschritt b) der Korrekturfaktor aus einer Division der Ist-Ströme der beiden Elektromotoren (M1, M2) ermittelt wird.

3. Verfahren nach Anspruch 1 oder 2, wobei im Verfahrensschritt c) eine Anpassung eines Regelparameters (P1) für eine Proportionalverstärkung des Geschwindigkeitsregelkreises (R1, R2) durchgeführt wird.

4. Verfahren nach Anspruch 1 oder 2, wobei im Verfahrensschritt c) eine Anpassung eines Regelparameters (P2) für die Drehmomentkonstante durchgeführt wird.

5. Verfahren nach Anspruch 1 oder 2, wobei im Verfahrensschritt c) eine Anpassung eines Regelparameters (P3) für eine Momentenbegrenzung des Geschwindigkeitsregelkreises (R1, R2) durchgeführt wird.

6. Verfahren nach einem der Ansprüche 1 bis 5, wobei im Verfahrensschritt c) die Anpassung der Regelparameter (P1, P2, P3) miteinander kombinierbar durchgeführt wird.

7. Verfahren nach einem der Ansprüche 1 bis 6, wobei das Kompensieren der unterschiedlichen Drehmomentkonstanten in einem einzelnen Antrieb (A1, A2) oder in beiden Antrieben (A1, A2) gemeinsam durchgeführt wird.

8. Verfahren nach einem der Ansprüche 1 bis 7, wobei das Kompensieren der unterschiedlichen Drehmomentkonstanten einmalig oder zyklisch-adaptiv bei laufendem Betrieb der Antriebsvorrichtung (1) durchgeführt wird.

9. Vorrichtung zum Kompensieren von unterschiedlichen Drehmomenten zweier Elektromotoren (M1, M2), wobei jeweils ein Elektromotor (M1, M2) in einem Antrieb (A1, A2) angeordnet ist, wobei die Antriebe (A1, A2) gekoppelt in einer Antriebsvorrichtung (1) angeordnet sind, wobei jeder Antrieb (A1, A2) mit einem Geschwindigkeitsregelkreis (R1, R2) auf eine identische Drehmomentabgabe geregelt wird, wobei die Vorrichtung eine Steuerungseinrichtung (2) umfasst, mit der Ist-Ströme in beiden Elektromotoren (M1,M2) ermittelbar sind, wobei mittels der Steuerungseinrichtung (2) aus den Ist-Strömen ein Korrekturfaktor, der ein Verhalten von Drehmomentkonstanten der Elektromotoren (M1,M2) beschreibt, ermittelbar ist, und wobei unter Verwendung des Korrekturfaktors im wesentlichen gleich große Kreisverstärkungen in den Geschwindigkeitsregelkreisen (R1,R2) der beiden Antriebe (A1,A2) einstellbar sind.

10. Vorrichtung nach Anspruch 9, wobei die Steuerungseinrichtung (2) eine Speichereinrichtung (4) umfasst, in der Regelparameter (P1, P2, P3) für die Geschwindigkeitsregelkreise (R1, R2) abgespeichert sind, die zur Durchführung des Verfahrens nach einem der Ansprüche 3 bis 8 verwendbar sind.

FIG.1